# EUROPÄISCHE PATENTSCHRIFT

(11) **EP 2 662 402 B1**
(45) Veröffentlichungstag und Bekanntmachung des Hinweises auf die Patenterteilung: **09.10.2019**
(21) Anmeldenummer: 12167661.3
(22) Anmeldetag: 11.05.2012
(51) Int. Cl.: C08K 5/098, C08L 21/00, B60C 1/00

(54) **KAUTSCHUKMISCHUNG**
RUBBER COMPOUND
MÉLANGE DE CAOUTCHOUC

(43) Veröffentlichungstag der Anmeldung: 13.11.2013
(73) Patentinhaber: Continental Reifen Deutschland GmbH, 30165 Hannover (DE)
(72) Erfinder: Jagst, Eda, 30657 Hannover (DE); Jungk, Juliane, 30163 Hannover (DE); Fernandes de Alencar, Maria Izabel, 30823 Garbsen (DE); Wangenheim, Ulrike, 30167 Hannover (DE)
(74) Vertreter: Fornefett, Iris

(56) Entgegenhaltungen:
- EP-A1- 1 514 901
- EP-A1- 1 808 456
- WO-A1-2010/000299
- WO-A1-2010/142563

## Beschreibung

Die Erfindung betrifft eine schwefelvernetzbare Kautschukmischung, insbesondere für Laufstreifen von Fahrzeugluftreifen.

Fahrzeugluftreifen müssen verschiedenen Anforderungen im Straßenverkehr gerecht werden. So spielt der Abrieb, insbesondere des Laufstreifens, für die Haltbarkeit des Reifens, aber auch für die Umweltbelastung eine wichtige Rolle. Scharfe Straßenbeläge, Schlaglöcher, Geröll und spitze Steine besonders bei LKW-Reifen mit viel oder zeitweisem Geländeeinsatz können zu teilweise schlagartigen Abbröckelungen und damit zu größerem Materialverlust, dem sogenannten "Chip & Chunk", führen. Risse und Löcher im Laufstreifen pflanzen sich durch die Umfangskräfte im Fahrbetrieb normalerweise radial nach innen fort und können dann bis zum Gürtel durchgehen. Dies führt in der Folge dazu, dass der Stahl des Gürtelpaketes eines LKW-Reifens korrodiert und damit instabiler wird. Man ist bestrebt, Reifen durch eine geeignete Konstruktion sowie eine gegenüber Abrieb und Chip & Chunk möglichst widerstandsfähige Kautschukmischung im Laufstreifen länger haltbar zu gestalten und damit letztlich die Sicherheit im Straßenverkehr zu erhöhen.

Für die Sicherheit im Straßenverkehr ist zudem das Nassbremsverhalten besonders wichtig. Hierzu müssen der Reifen und besonders die Kautschukmischung des Laufstreifens beim Bremsen möglichst schnell die Energie absorbieren, also eine möglichst hohe Dämpfung aufweisen. Im Fahrbetrieb ist eine hohe Dämpfung jedoch nicht erwünscht, da dies den Rollwiderstand und damit den Spritverbrauch erhöht, was ökologische und ökonomische Nachteile mit sich bringt.

Es ist in der Fachwelt bekannt, dass eine Verbesserung einer Reifeneigenschaft mit der Verschlechterung einer anderen einhergeht. Ein sogenannter Zielkonflikt besteht z.B. wie beschrieben zwischen dem Nassbremsen und dem Rollwiderstand. Ein weiterer Zielkonflikt einer Laufstreifenmischung kann zwischen der Abriebresistenz und dem Rollwiderstand oder dem Widerstand gegenüber Chip & Chunk liegen. Üblicherweise wählt man für eine hohe Abriebbeständigkeit eine Kautschukmischung mit einer hohen Shore-Härte. Stellt man diese erhöhte Shore-Härte über eine höhere Füllstoffmenge ein, so erhöht sich der Rollwiderstand des Reifens. Gelangt man mittels einer Anpassung des Netzwerkes zu einer erhöhten Shore-Härte, so verringert sich der Widerstand gegenüber Riss-Bildung und Riss-Fortpflanzung insbesondere bei spontanen schlagartigen Belastungen, welche aufgrund der hohen Kräfte am Reifen im Fahrbetrieb zu dem oben beschriebenen Phänomen des Chip & Chunk führen.

Um diesen Anforderungen gerecht zu werden und eine sehr gute Leistung und Haltbarkeit des Reifens zu erzielen, werden z.B. in einer Laufstreifenmischung oft mehrere unterschiedliche Kautschuktypen im Verschnitt eingesetzt. Hier steht man vor der Herausforderung, dass sich unterschiedliche Polymere nicht vollständig oder sogar nur zu einem sehr geringen Maß ineinander lösen. Dies führt im Fall von einem Verschnitt aus zwei Polymeren dazu, dass ein Polymer eine kontinuierliche Phase bildet, während das andere in kleinen Domänen in der kontinuierlichen Phase verteilt ist. Wenn diese lokalen Phasentrennungen nicht homogen sehr fein verteilt sind, liegen die oben beschriebenen Reifeneigenschaften im Allgemeinen auf einem schlechteren Niveau.

Es ist bekannt, dass durch den Zusatz von Additiven eine Verbesserung der Homogenität von Kautschukmischungen mit unterschiedlichen Polymeren im Verschnitt erzielt werden kann. Einen Großteil der eingesetzten Prozessadditive stellen modifizierte Kohlenwasserstoffharze dar.

In der JP 3714750 B ist eine Kautschukmischung offenbart, die 100 phr eines Dienkautschuks mit einer Glasübergangstemperatur von -35 bis 0 °C und ein Kohlenwasserstoffharz mit C5- und C9-Fraktionen und einer Glasübergangstemperatur (Tg) von 5 bis 100 °C enthält. Diese Mischung weist im Reifen ein verbessertes Kraftschlussverhalten (grip performance) und somit bessere Beschleunigungs- und Bremseigenschaften auf.

EP1514901 offenbart eine Kautschukmischung (vgl. Anspruch 1) umfassend
1. ein Copolymer (a), welches ein Styrol-Butadien-Copolymer mit einem gewichtsgemittelten Molekulargewicht von 4.0x10⁵ bis 3.0x10⁵ und mit einem bestimmten Verhältnis zwischen Styrol- und Butadien-Einheiten ist,
2. ein Copolymer (b), welches ein hydrogeniertes Styrol-Butadien-Copolymer mit einem gewichtsgemittelten Molekulargewicht von 5.0x10³ bis 2.0x10⁵ und mit einem bestimmten Verhältnis zwischen Styrol- und Butadien-Einheiten ist,
3. und mindestens eine Verbindung (c) ausgesucht aus
   i) der Kautschukmischung Klebrigkeit verleihende Harzen und
   ii) flüssigen Polymeren mit einem gewichtsgemittelten Molekulargewicht von 1000 bis 50000.

EP1808456 offenbart eine "schwefelvernetzbare Kautschukmischung ohne aromatische Prozessöle [...] enthaltend zumindest einen Dienkautschuk, 5 - 100 phr [...] zumindest eines Rußes mit einer lodadsorptionszahl von 100 - 180 g/kg und einer DBP-Zahl von 100 - 150 cm³/100 g, 5 - 80 phr zumindest eines Mineralölweichmachers, der einen Gehalt an polycyclischen aromatischen Verbindungen bestimmt mit dem DMSO-Extrakt nach der IP 346 Methode von weniger als 3 Gew.% bezogen auf das Gesamtgewicht des Mineralölweichmachers aufweist, und 5 - 30 phr zumindest eines Harzes mit einem mittleren Molekulargewicht bestimmt mit GPC von weniger als 400 g/mol und einem Erweichungspunkt (Ring und Kugel gemäß ASTM E 28) von weniger als 40 °C" (s. Anspruch 1).

WO2010/142563 offenbart eine "thermisch härtbare Zusammensetzung, enthaltend, bezogen auf die gesamte Zusammensetzung a) 5 bis 90 Gew.-% eines olefinische Doppelbindungen enthaltenden Polymers oder Copolymers auf Basis Dien und/oder eines aromatisch substituierten Olefins, wobei das Polymer oder Copolymer bei 22 °C flüssig oder pastös ist und eine Glastemperatur, gemessen nach einer DSC-Methode, zwischen - 30 °C und+ 15 °C aufweist, b) ein Vulkanisationssystem ausgewählt aus der Gruppe bestehend aus: b1) Schwefel und einem oder mehreren Beschleuniger(n), b2) peroxidischen oder disulfidischen Vulkanisationssystemen b3) Chinonen, Chinondioximen oder Dinitrosobenzol" (s. Anspruch 1).

Aus der WO 2008084860 A1 ist eine Kautschukmischung bekannt, die ein Harz auf Inden-Basis als C9-Fraktion mit einem Inden-Gehalt von 30 bis 80 Massenprozent und einem Erweichungspunkt von 130 bis 190 °C enthält. Es wird u.a. das unter dem Handelsnamen NOVARES® TN 170 erhältliche Harz mit einer Glasübergangstemperatur von 120 °C verwendet.

In der US 2011/190416 A1 wird eine Kautschukmischung mit verbessertem Griff auf Eis, und somit verbessertem Beschleunigungs- und Bremsverhalten auf Eis, offenbart. Diese Mischung kann u.a. 3 bis 60 phr eines C9-Kohlenwasserstoffharzes mit einer Glasübergangstemperatur größer als 20 °C enthalten. Bevorzugt werden 10 phr eines Harzes mit einer T_{g} von 72 °C eingesetzt.

Die US 2008/0009564 A1 offenbart eine Kautschukmischung, die als Weichmachersystem 5 bis 35 phr MES (mild extraction solvate) oder TDAE (treated distillate aromatic extract) Öl und 5 bis 35 phr eines Copolymer-Harzes aus einer C5-Fraktion und einer vinylaromatischen Fraktion enthält. Letztere kann eine C9-Fraktion sein, bevorzugt ist Styrol (C7-Fraktion). Die Glasübergangstemperatur (T_{g}) dieser Harze ist größer als 20 °C. Damit werden Rollwiderstand, Nassgriff- und Chip&Chunk-Performance der Kautschukmischung verbessert.

Den gesamten Schriften ist gemein, dass sie keine näheren Angaben über das Abriebverhalten der jeweilig genannten Kautschukmischungen enthalten.

Der Erfindung liegt nun die Aufgabe zugrunde, eine Kautschukmischung bereitzustellen, die eine Verbesserung der Abriebeigenschaften und des Nassbremsens bei gleichbleibendem Rollwiderstand, gleichbleibendem Widerstand gegenüber Chip&Chunk und den sonstigen Reifeneigenschaften auf gleichbleibendem Niveau ermöglicht. Gleichzeitig soll die Kautschukmischung eine gute Verarbeitbarkeit aufweisen.

Gelöst wird die Aufgabe erfindungsgemäß dadurch, dass die schwefelvemetzbare Kautschukmischung
- wenigstens zwei Dienkautschuke und
- 0,1 bis 20 phr wenigstens eines aliphatisch modifizierten C9-Kohlenwasserstoffharzes und
- 0,1 bis 7 phr wenigstens eines weiteren Verarbeitungswirkstoffes.
enthält.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise weist die erfindungsgemäße Kautschukmischung sehr gute Abriebeigenschaften auf, ohne dass die weiteren Vulkanisateigenschaften negativ beeinträchtigt werden. Insbesondere zeigt sich zusätzlich ein optimiertes Nassbremsverhalten.

Die erfindungsgemäße Kautschukmischung enthält zumindest zwei Dienkautschuke im Verschnitt. Zu den Dienkautschuken zählen alle Kautschuke mit einer ungesättigten Kohlenstoffkette, die sich zumindest teilweise von konjugierten Dienen ableiten. Einsetzbare Dienkautschuke sind beispielsweise natürliches Polyisopren (NR), synthetisches Polyisopren (IR), Polybutadien (BR), Styrol-Butadien-Kautschuk (SBR), Styrol-Isopren-Butadien-Terpolymer, Butylkautschuk, Halobutylkautschuk, Ethylen-Propylen-Dien-Kautschuk (EPDM) oder modifizierte Dienkautschuke. Bei der Modifizierung kann es sich um solche mit Hydroxyl-Gruppen und/oder Ethoxy-Gruppen und/oder Epoxy-Gruppen und/oder Siloxan-Gruppen und/oder Amino-Gruppen und/oder Aminosiloxan und/oder Carboxyl-Gruppen und/oder Phthalocyanin-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Bei der Modifizierung kann es sich um die oben beschriebenen Gruppen und Funktionalisierungen handeln.

Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Abriebeigenschaften der Kautschukmischung erzielt.

Das eingesetzte Polybutadien kann endgruppenmodifiziert sein. Bei der Modifizierung kann es sich um die oben beschriebenen Gruppen und Funktionalisierungen handeln. Bevorzugt werden natürliches und/oder synthetisches Polyisopren und/oder Polybutadien und/oder Styrol-Butadien-Kautschuk im Verschnitt eingesetzt.

Gemäß einer bevorzugten Weiterbildung der Erfindung enthält die Kautschukmischung 15 bis 60 phr eines natürlichen und/oder synthetischen Polyisoprens, 5 bis 50 phr eines Polybutadien-Kautschuks sowie 5 bis 50 phr eines Styrol-Butadien-Kautschuks. Eine solche Kautschukmischung zeigt besonders vorteilhafte Abriebeigenschaften in LKW-Laufstreifen.

Erfindungsgemäß enthält die Kautschukmischung wenigstens ein aliphatisch modifiziertes C9-Kohlenwasserstoffharz. Als C9-Kohlenwasserstoffharze werden solche Harze bezeichnet, die zumindest teilweise Bausteine von Monomeren auf Basis aromatischer Kohlenwasserstoffverbindungen mit 9 Kohlenstoffatomen beinhalten, auch als C9-Fraktionen bezeichnet. Durch einen zusätzlichen Modifizierungsschritt werden aliphatische (nicht aromatische) Seitenketten in die Harzstruktur eingebracht.

Erfindungsgemäß beträgt die Menge an aliphatisch modifiziertem C9-Kohlenwasserstoffharz 0,1 bis 20 phr. Besonders bevorzugt enthält die Kautschukmischung 2 bis 10 phr und ganz besonders bevorzugt 2 bis 5 phr des aliphatisch modifizierten C9-Kohlenwasserstoffharzes. Es ist im Rahmen dieser Erfindung auch denkbar, dass zwei verschiedene aliphatisch modifizierte C9-Kohlenwasserstoffharze im Verschnitt eingesetzt werden.

Bevorzugt ist es, wenn das aliphatisch modifizierte C9-Kohlenwasserstoffharz einen Erweichungspunkt gemäß ASTM D 3461von 80 bis 120 °C, besonders bevorzugt einen Erweichungspunkt von 85 bis 115 °C, ganz besonders bevorzugt einen Erweichungspunkt von 90 bis 110 °C aufweist. Ein solches Harz mit einem Erweichungspunkt von 95 bis 105 °C ist z.B. von Rütgers Chemicals unter dem Handelsnamen NOVARES® TP 100 erhältlich.

Das aliphatisch modifizierte Kohlenwasserstoffharz hat vorzugsweise eine Glasübergangstemperatur gemäß ISO11357-1 von -150 °C bis + 150 °C, bevorzugt -50 °C bis +120 °C.

Die Kautschukmischung enthält erfindungsgemäß 0,1 bis 7 phr wenigstens eines weiteren Verarbeitungswirkstoffes (engl. processing aid). Als weitere Verarbeitungswirkstoffe werden im Rahmen dieser Erfindung solche Verarbeitungswirkstoffe angesehen, die nicht aliphatisch modifizierte C9-Kohlenwasserstoffharze sind. Zu den weiteren Verarbeitungswirkstoffen zählen hierbei Fettsäuren, Metallseifen, Fettsäureester, Fettalkohole, Fettamine und deren Gemische. Bevorzugt enthält der Verarbeitungswirkstoff wenigstens eine Metallseife. Besonders bevorzugt ist es, wenn der Verarbeitungswirkstoff wenigstens eine Zinkseife enthält, womit besonders gute Vulkanisateigenschaften erzielt werden. Ein bevorzugter Verarbeitungswirkstoff, der wenigstens eine Zinkseife enthält, ist z.B. unter dem Handelsnamen Struktol® A 60 erhältlich.

In einer besonders bevorzugten Ausführungsform enthält die Kautschukmischung 2 bis 4 phr, besonders bevorzugt 2,5 bis 3,5 phr eines weiteren Verarbeitungswirkstoffes.

Die Kautschukmischung kann als Füllstoffe Ruß und/oder Kieselsäure in üblichen Mengen enthalten. Sie kann außerdem noch andere Füllstoffe, wie beispielsweise Alumosilicate, Kreide, Stärke, Magnesiumoxid, Titandioxid oder Kautschukgele enthalten.

Die verwendbaren Ruße weisen bevorzugt folgende Charakteristika auf: DBP-Zahl (gemäß ASTM D 2414) 90 bis 200 ml/100 g, CTAB-Zahl (gemäß ASTM D 3765) 80 bis 170 m²/g und Jodadsorptionszahl (gemäß ASTM D 1510) 10 bis 250 g/kg. Als Ruß kann z.B. N121 (DBP = 132 ml/100 g; Jodzahl = 121 g/kg; CTAB = 121 m²/g) eingesetzt werden. Mit einem solchen Ruß werden besonders gute Abriebeigenschaften erzielt.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 250 m²/g, besonders bevorzugt 130 bis 200 m²/g und eine CTAB-Oberfläche (gemäß ASTM D 3765) von 30 bis 350 m²/g, bevorzugt von 30 bis 245 m²/g, besonders bevorzugt von 125 bis 195 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Als Silan-Kupplungsagenzien können dabei alle dem Fachmann für die Verwendung in Kautschukmischungen bekannten Silan-Kupplungsagenzien verwendet werden. Dies können z.B. 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, sein. TESPT kann dabei beispielsweise auch als Gemisch mit Industrieruß (Handelsname X50S der Firma Degussa) zugesetzt werden.

Die Kautschukmischung kann außerdem Weichmacher enthalten. Hierzu gehören alle dem Fachmann bekannten wie aromatische, naphthenische oder paraffinische Mineralölweichmacher, Rubber-to-Liquid-Öle (RTL), Biomass-to-Liquid-Öle (BTL), MES (mild extraction solvate) oder TDAE (treated distillate aromatic extract), Weichmacherharze, oder flüssige Polymere (z. B. flüssiges Polybutadien).

Die Menge an diesen Weichmachern beträgt 0 bis 5 phr, bevorzugt 0 bis 3 phr, wenigstens aber 0,1 phr.

Sehr gute Abriebergebnisse zeigen sich auch, wenn die Kautschukmischung frei von Weichmachern ist, also 0 phr Weichmacher enthält.

Des Weiteren kann die erfindungsgemäße Kautschukmischung übliche Zusatzstoffe in üblichen Gewichtsteilen enthalten. Zu diesen Zusatzstoffen zählen beispielsweise a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren wie z.B. Stearinsäure, c) Zinkoxid, d) Wachse, und e) Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender sowie Beschleuniger werden im letzten Mischungsschritt in den genannten Mengen der Kautschukmischung zugesetzt.

Der Beschleuniger ist bevorzugt ausgewählt aus der Gruppe bestehend aus den Thiazolbeschleunigern und/oder den Mercaptobeschleunigern und /oder den Sulfenamidbeschleunigern und/oder den Thiocarbamatbeschleunigern und/oder den Thiurambeschleunigern und/oder den Thiophosphatbeschleunigern und/oder den Thioharnstoffbeschleunigern und/oder den Xanthogenat-Beschleunigern und/oder den Guanidin-Beschleunigern.

Besonders bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Außerdem können in der Kautschukmischung Vulkanisationsverzögerer vorhanden sein.

Der Erfindung liegt weiterhin die Aufgabe zugrunde einen Fahrzeugluftreifen bereitzustellen, der in wenigstens einem Bauteil die erfindungsgemäße Kautschukmischung enthält. Bevorzugt handelt es sich bei dem Bauteil um einen Laufstreifen, vorzugsweise eines LKW.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel, Schwefelspender und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Mooney-Viskosität gemäß ASTM D1646
- Shore-A-Härte bei Raumtemperatur gemäß DIN ISO 7619-1
- Rückprallelastizität bei RT und 70 °C gemäß DIN 53 512
- Zugfestigkeit, Reißdehnung und Spannungswert bei 300% statischer Dehnung bei Raumtemperatur gemäß DIN 53 504
- Hochgeschwindigkeitsbruchdehnung als Reißenergie pro verformtem Volumen bei Raumtemperatur gemäß High Speed Tear Energy Test (HSTE) nach DIN EN 10 045
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)

**Tabelle 1**

| **Bestandteile** | **Einheit** | **V1** | **E1** | **V2** | **E2** |
|---|---|---|---|---|---|
| NR ^{a)} | phr | 40 | 40 | 40 | 40 |
| Nd-BR ^{b)} | phr | 20 | 20 | 20 | 20 |
| S-SBR ^{c)} | phr | 40 | 40 | 40 | 40 |
| RußN121 | phr | 52 | 52 | 52 | 52 |
| Harz ^{d)} | phr | - | 3 | - | 3 |
| Verarbeitungswirkstoff ^{e)} | phr | 3 | 3 | 3 | 3 |
| Alterungsschutzmittel | phr | 6 | 6 | 6 | 6 |
| Stearinsäure | phr | 2 | 2 | 2 | 2 |
| Zinkoxid | phr | 3 | 3 | 3 | 3 |
| Beschleuniger TBBS | phr | 1,7 | 1,7 | - | - |
| Beschleuniger DCBS | phr | - | - | 2,5 | 2,5 |
| Schwefel | phr | 1,7 | 1,7 | 1,7 | 1,7 |

| **Eigenschaften** | | | | | |
|---|---|---|---|---|---|
| Mooney-Viskosität ML (1+4) bei 100 °C | Mooney-Einh. | 84 | 77 | 79 | 74 |
| Härte bei RT | Shore A | 68 | 67 | 67 | 65 |
| Rückprallelast. bei RT | % | 49,6 | 47,9 | 47,9 | 46,8 |
| Rückprallelast. bei 70 °C | % | 60,5 | 59,9 | 58,9 | 59,3 |
| Zugfestigkeit bei RT | MPa | 16,5 | 18,3 | 19,4 | 16,8 |
| Reißdehnung bei RT | % | 314 | 357 | 379 | 365,6 |
| Modul 300 % | MPa | 17,6 | 16,0 | 15,7 | 14,2 |
| HSTE | MJ/cm³ | 2,7 | 3,0 | 3,2 | 3,4 |
| Grosch Abrieb | % | 100 | 129 | 100 | 127 |

| | | | | | |
|---|---|---|---|---|---|
| ^{a)} NR: SMR10 CE ^{b)} Nd-BR: Europrene NeoCis BR 40, Fa. Polimeri Europa GmbH ^{c)} S-SBR: Nipol NS 112R, Fa. Nippon Zeon ^{d)} Harz: NOVARES® TP 100, Fa. Rütgers Chemicals e) Struktol® A 60, Fa. Struktol | | | | | |

Wie aus Tabelle 1 ersichtlich, verbessert sich die Abriebperformance der erfindungsgemäßen Mischungen F1 und E2 gegenüber ihren jeweiligen Vergleichsmischungen V1 und V2 deutlich ohne das die anderen Eigenschaften verschlechtert werden. Die niedrigeren Rückprallelastizitäten bei Raumtemperatur der Mischungen F1 und E2 sind Indikatoren dafür, dass das Nassbremsverhalten dieser Mischungen gegenüber V1 bzw. V2 verbessert ist. Die höheren HSTE-Werte der Mischungen F1 und E2 sind Indikatoren dafür, dass der Widerstand gegenüber Chip & Chunk im Vergleich zu V1 bzw. V2 verbessert ist.

## Patentansprüche

1. Schwefelvernetzbare Kautschukmischung enthaltend
- wenigstens zwei Dienkautschuke und
- 0,1 bis 20 phr wenigstens eines aliphatisch modifizierten C9-Kohlenwasserstoffharzes und
- 0,1 bis 7 phr wenigstens eines weiteren Verarbeitungswirkstoffes.

2. Kautschukmischung nach Anspruch 1, **dadurch gekennzeichnet, dass** die Dienkautschuke ausgewählt sind aus der Gruppe bestehend aus natürlichem und/oder synthetischem Polyisopren und/oder Polybutadien und/oder Styrol-Butadien-Kautschuk.

3. Kautschukmischung nach einem der Ansprüche 1 bis 2, **dadurch gekennzeichnet, dass** das aliphatisch modifizierte C9-Kohlenwasserstoffharz einen Erweichungspunkt gemäß ASTM D 3461 zwischen 80 °C und 120 °C hat.

4. Kautschukmischung nach einem der Ansprüche 1 bis 3, **dadurch gekennzeichnet, dass** die Menge an aliphatisch modifiziertem C9-Kohlenwasserstoffharz 2 bis 10 phr beträgt.

5. Kautschukmischung nach einem der Ansprüche 1 bis 4, **dadurch gekennzeichnet, dass** der weitere Verarbeitungswirkstoff wenigstens eine Zinkseife enthält.

6. Fahrzeugluftreifen, **dadurch gekennzeichnet, dass** er in wenigstens einem Bauteil wenigstens eine Kautschukmischung nach einem der Ansprüche 1 bis 5 enthält.

7. Fahrzeugluftreifen nach Anspruch 6, **dadurch gekennzeichnet, dass** das Bauteil ein Laufstreifen ist.

## Claims

1. Sulfur-crosslinkable rubber mixture comprising
- at least two diene rubbers and
- from 0.1 to 20 phr of at least one aliphatically modified C9 hydrocarbon resin and
- from 0.1 to 7 phr of at least one further processing aid.

2. Rubber mixture according to Claim 1, **characterized in that** the diene rubbers are selected from the group consisting of natural and/or synthetic polyisoprene and/or polybutadiene and/or styrenebutadiene rubber.

3. Rubber mixture according to one of Claims 1 to 2, **characterized in that** the aliphatically modified C9 hydrocarbon resin has a softening point according to ASTM D 3461 between 80°C and 120°C.

4. Rubber mixture according to one of Claims 1 to 3, **characterized in that** the amount of aliphatically modified C9 hydrocarbon resin is from 2 to 10 phr.

5. Rubber mixture according to one of Claims 1 to 4, **characterized in that** the further processing aid comprises at least one zinc soap.

6. Motor vehicle pneumatic tire, **characterized in that** it comprises in at least one component at least one rubber mixture according to one of Claims 1 to 5.

7. Motor vehicle pneumatic tire according to Claim 6, **characterized in that** the component is a tread.

## Revendications

1. Mélange de caoutchouc, vulcanisable, contenant
- au moins deux caoutchoucs de diène et
- 0,1 à 20 phr d'au moins une résine d'hydrocarbure en C₉ modifiée aliphatiquement et
- 0,1 à 7 phr d'au moins une autre substance active de traitement.

2. Mélange de caoutchouc selon la revendication 1, **caractérisé en ce que** les caoutchoucs de diène sont choisis dans le groupe constitué par le polyisoprène naturel et/ou synthétique et/ou le polybutadiène et/ou le caoutchouc de styrène-butadiène.

3. Mélange de caoutchouc selon l'une quelconque des revendications 1 et 2, **caractérisé en ce que** la résine d'hydrocarbure en C₉ modifiée aliphatiquement possède un point de ramollissement entre 80°C et 120°C selon la norme ASTM D 3461.

4. Mélange de caoutchouc selon l'une quelconque des revendications 1 à 3, **caractérisé en ce que** la quantité de résine d'hydrocarbure en C₉ modifiée aliphatiquement est de 2 à 10 phr.

5. Mélange de caoutchouc selon l'une quelconque des revendications 1 à 4, **caractérisé en ce que** l'autre substance active de traitement contient au moins un savon de zinc.

6. Pneumatique de véhicule, **caractérisé en ce qu'**il contient au moins un mélange de caoutchouc selon l'une quelconque des revendications 1 à 5 dans au moins un élément.

7. Pneumatique de véhicule selon la revendication 6, **caractérisé en ce que** l'élément est une bande de roulement.
